Europäisches Patentamt

European Patent Office

Office européen des brevets

(11) Veröffentlichungsnummer: **0 121 177**
A2

(12) # EUROPÄISCHE PATENTANMELDUNG

(21) Anmeldenummer: 84103063.8

(22) Anmeldetag: 20.03.84

(51) Int. Cl.³: **H 04 L 7/02**

(30) Priorität: 30.03.83 DE 3311677

(43) Veröffentlichungstag der Anmeldung:
10.10.84 Patentblatt 84/41

(84) Benannte Vertragsstaaten:
DE FR GB

(71) Anmelder: Siemens Aktiengesellschaft
Berlin und München Wittelsbacherplatz 2
D-8000 München 2(DE)

(72) Erfinder: Moustakas, Steven, Dr.
Agnesstrasse 2
D-8000 München 40(DE)

(72) Erfinder: Witte, Hans-Hermann, Dr.
Hippelstrasse 15
D-8000 München 82(DE)

(54) Vorrichtung zur Rückgewinnung eines Taktes aus einer Signalfolge.

(57) Es wird eine Vorrichtung zur Rückgewinnung eines bestimmten Taktes aus einer mit diesem Takt getakteten Signalfolge, insbesondere einer Zufallsfolge, beschrieben. Die Vorrichtung besteht aus einem Taktgenerator, der von sich aus Taktsignale in einem Takt erzeugt, dessen Taktlänge auf den bestimmten Takt der Signal-folge abgestimmt ist, und der durch ein oder mehrere bestimmte Signale der Signalfolge extern triggerbar ist, um dadurch seinen Takt mit dem Takt der Signalfolge zu synchronisieren. Der Taktgenerator besteht vorzugsweise aus einem monostabilen Multivibrator, dessen Ausgangs-signale verzögert auf den als Triggereingang dienenden Eingang rückgekoppelt werden.

FIG 1

SIEMENS AKTIENGESELLSCHAFT          Unser Zeichen
Berlin und München                  VPA  83 P 1228 E


Vorrichtung zur Rückgewinnung eines Taktes aus einer
Signalfolge


Die vorliegende Erfindung betrifft eine Vorrichtung zur
Rückgewinnung eines Taktes aus einer Signalfolge nach
dem Oberbegriff des Patentanspruchs 1.

In digitalen Datenübertragungs-Systemen müssen am Ende
der Übertragungsstrecke die in einem bestimmten Takt
übertragenen Bits des Datenstromes über einen dazu passenden Takt auf ihren Zustand abgefragt werden. Die
Taktrückgewinnung aus den im Empfänger einlaufenden
Daten, die Zufallsfolgen sind, stellt daher eine wichtige Forderung dar.

Zur Taktrückgewinnung können sog. PLL-Schaltungen oder
Schwingkreis-Schaltungen verwendet werden, die jedoch
aufwendig sind und nur dann funktionieren, wenn im Bitstrom genügend viele Flanken, beispielsweise Vorderflanken, vorhanden sind, was man durch Verwendung geeigneter Scrambler/Descrambler erreichen kann.

Aufgabe der vorliegenden Erfindung ist es, eine sehr
einfach aufgebaute Vorrichtung der eingangs genannten
Art anzugeben.

Diese Aufgabe wird durch die im kennzeichnenden Teil des
Patentanspruchs 1 angegebenen Merkmale gelöst.

Der Erfindung liegt die Erkenntnis zugrunde, daß für die
meisten Anwendungen, insbesondere auch in Datenübertragungssystemen, ein aus den Daten zurückgewonnener Takt

Ed 1 Sti/25.2.83

ausreicht, der etwas in seiner Phasenlage und in seinem Taktverhältnis schwanken kann. Eine solche Qualität des Taktes reicht beispielsweise aus, wenn die Bits nur auf ihren Zustand abgefragt werden müssen und nicht auch noch eine zeitlich, exakte Neuformierung der Daten vorgenommen werden muß, wie sie beispielsweise nötig werden kann, wenn die Daten wieder nach einem Repeater auf die Übertragungsstrecke geschickt werden sollen.

Mit einer erfindungsgemäßen Vorrichtung kann vorteilhafterweise der Takt aus gescrambelten oder verwürfelten NRZ-Daten sehr leicht erhalten werden. Es wird keine Redundanz benötigt und die Strecken-Bitrate ist gleich der Nutzdatenrate, d.h. die Nutzdatenrate muß nicht erniedrigt werden.

Eine erfindungsgemäße Vorrichtung weist vorteilhafterweise, insbesondere im Vergleich mit bisher verwendeten PLL-Schaltungen oder Schwingkreisschaltungen einen sehr einfachen Aufbau auf, der mit nur wenigen Digitalbausteinen realisierbar ist.

Mit einer erfindungsgemäßen Vorrichtung läßt sich vorteilhafterweise ein Takt erzeugen, der in Frequenz und Phase ausreichend gut mit dem Takt der Daten übereinstimmt.

Eine besonders zweckmäßige Ausgestaltung einer erfindungsgemäßen Vorrichtung geht aus Anspruch 2 hervor. Bei dieser Ausgestaltung wird der vom Taktgenerator abgegebene Takt in begrenzten Zeitabständen immer wieder in Phase mit dem in der Signalfolge enthaltenen Takt gebracht und dadurch sichergestellt, daß der abgegebene Takt phasenmäßig nicht zu weit vom Takt der Signalfolge abweichen kann.

Als die bestimmten Signale der Signalfolge, die zum
Triggern verwendet werden, kommen in erster Linie bestimmte Signalwechsel der Signalfolge infrage, vorzugsweise die Vorderflanken taktmäßig erzeugter Impulse,
welche die Signale der Signalfolge bilden.

Damit bei binären Impulsfolgen solche Vorderflanken oder
bestimmten Signale in ausreichend kleinen Zeitabständen
immer wieder auftreten, wird die Impulsfolge zweckmäßigerweise gescrambelt oder verwürfelt.

Eine besonders einfach aufgebaute vorteilhafte Vorrichtung nach Anspruch 2 geht aus dem Anspruch 3 hervor.

Es ist bei dieser Vorrichtung nach Anspruch 3 zweckmäßig, gemäß Anspruch 4 die Verzögerungszeit für die
rückzukoppelnden Ausgangssignale des Multivibrators
etwas größer zu wählen als die Taktlänge des bestimmten
Taktes. Dadurch ist sichergestellt, daß die triggernde
Flanke eines Datenimpulses stets vor der triggernden
Flanke eines verzögerten Ausgangssignals erscheint.

Vorteilhaft und zweckmäßig ist es, eine Vorrichtung nach
Anspruch 3 oder 4 so auszubilden, wie es im Anspruch 5
angegeben ist.

Weitere zweckmäßige Ausführungsformen einer Vorrichtung
nach einem der Ansprüche 3 bis 5 sind in den Ansprüchen
6 und 7 angegeben.

Bei den erfindungsgemäßen Vorrichtungen nach einem der
Ansprüche 3 bis 7 ist es zweckmäßig, gemäß Anspruch 8
eine Signalformungseinrichtung vorzusehen, die an allen
Flankenwechseln in der Signalfolge ein kurzzeitiges Signal ein und derselben Polarität erzeugt, das zum
Triggern des Taktgenerators zu verwenden ist.

Eine vorteilhafte Ausführungsform einer derartigen Signaldauerverkürzungseinrichtung geht aus dem Anspruch 9 hervor.

Ein Ausführungsbeispiel der Erfindung wird anhand der Figuren in der folgenden Beschreibung näher erläutert. Von den Figuren zeigen:

Figur 1 das Schaltbild einer kompletten erfindungsgemäßen Vorrichtung,

Figur 2 das Schaltbild des in Figur 1 enthaltenen monostabilen Multivibrators, der diskret aufgebaut ist, und

Figur 3 Impulsdiagramme über der Zeit t, wobei die Zeitpunkte $t_1$ bis $t_8$ dem bestimmten Takt der Daten entsprechen.

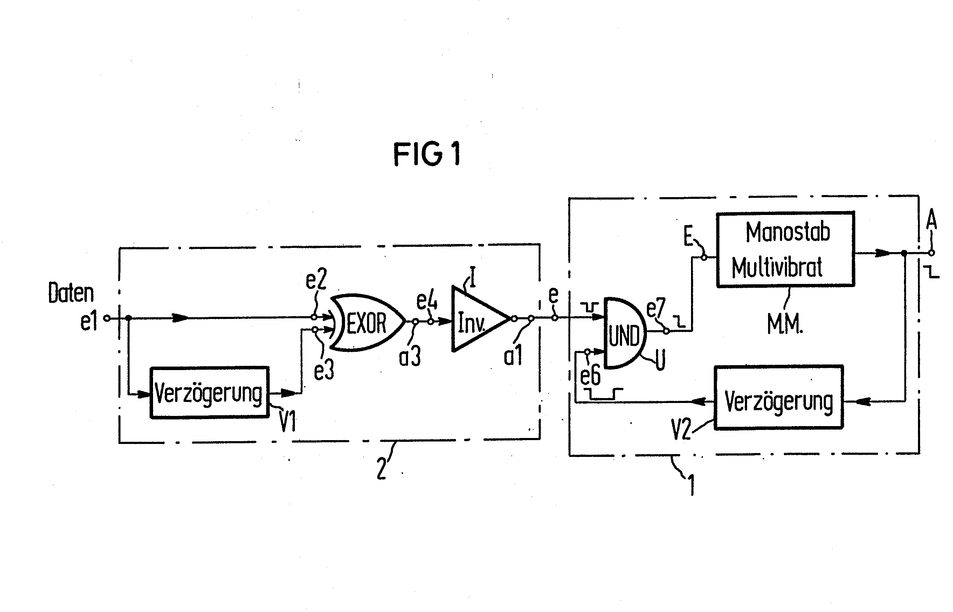

Die in Figur 1 dargestellte Vorrichtung besteht aus einem triggerbaren Taktgenerator 1, dessen Triggereingang e eine Signalformungseinrichtung 2 vorgeschaltet ist.

Die Signalfolgen in Form von Daten werden dem Eingang e1 der Signalformungseinrichtung zugeführt. Von dort werden sie einerseits einem ersten Eingang e2 einer exklusiven ODER-Schaltung EXOR zugeführt, andererseits über ein Verzögerungsglied V1 einem zweiten Eingang e3 des exklusiven ODER-Gliedes EXOR zugeführt. Die Verzögerungszeit des Verzögerungsgliedes V1 beträgt höchstens die halbe Taktlänge des bestimmten Taktes, mit dem die Daten getaktet sind, mindestens etwa 15 ns.

Beispielsweise entspreche die Impulsdauer der Datenimpulse der Taktlänge des bestimmten Taktes der Daten.

Die Verzögerung V1 und das exklusive EXOR bewirken, daß bei allen Flanken der Datenimpulse am Ausgang $a_3$ des exklusiven ODER-Gliedes Impulse ein und derselben Polarität erscheinen, deren Impulsdauer kürzer ist als die Taktlänge des bestimmten Taktes der Daten. Die Impulsdauer der kürzeren Impulse ist gleich der Verzögerungszeit des Verzögerungsgliedes V1.

Die kurzen Impulse aus dem Ausgang $a_3$ des exklusiven ODER- Gliedes EXOR werden einem Eingang e4 eines Inverters I zugeführt, dessen Sinn weiter unten erklärt wird. Der Ausgang a1 dieses Inverters I ist der Ausgang der Signalformungseinrichtung 2.

Die an diesem Ausgang a1 erscheinenden kurzen negativen Impulse werden dem Triggereingang e des Taktgenerators 1 zugeführt. Dieser Taktgenerator 1 besteht aus einem monostabilen Multivibrator M.M. mit einem Eingang E und einem Ausgang A, der über ein Verzögerungsglied V2 und ein UND-Glied U mit dem Eingang E verbunden ist. Der Ausgang A des Multivibrators M.M. kann auch der Ausgang des Taktgenerators 1 sein, an dem die zu erzeugenden Taktsignale abgegeben werden.

Der monostabile Multivibrator werde beispielsweise durch eine negative Impulsflanke am Eingang E angestoßen, die einem Signalwechsel von '1' nach '0' entspricht.

Das UND-Glied U stellt sicher, daß dieser Signalwechsel, der die Vorderflanke der kurzen negativen Impulse aus dem Ausgang a1 des Inverters I bildet, stets an den Eingang E des monostabilen Multivibrators M.M. gelangt. Dazu ist aber notwendig, daß auch die am Ausgang A des Multivibrators M.M. erscheinenden Ausgangssignale solche Impulse sind, die mit einer negativen Flanke beginnen.

0121177

Unter dieser Voraussetzung liegen der den Triggereingang
e bildende eine Eingang und der andere Eingang e6 des
UND-Gliedes auf '1', wenn keine Impulse vorhanden sind.
Dann liegt aber auch der mit dem Eingang des Multivibrators verbundene Ausgang e7 des UND-Gliedes bei Abwesenheit von Impulsen auf '1'. Dies ist die Voraussetzung dafür, daß die an das UND-Glied gelangenden und
den Multivibrator anstoßenden negativen Impulsflanken
der kurzen negativen Impulse aus dem Inverter I stets an
den Eingang E des Multivibrators M.M. gelangen.

Die R.C.-Konstante des M.M. wird so gewählt, daß er für
eine bestimmte Zeit, beispielsweise die halbe Taktlänge
des bestimmten Taktes der Daten im instabilen Zustand
bleibt. Die Ausgangssignale des M.M. sind entsprechend
lang.

Die Verzögerungszeit des Verzögerungsgliedes V2 ist so
zu wählen, daß die Gesamtverzögerung, die sich aus der
Summe der Laufzeiten durch das UND-Gatter, den Multivibrator und die Verzögerung V2 selbst ergibt, etwas
größer ist als die Taktlänge des bestimmten Taktes der
Daten. Die Wahl dieser Verzögerung ist aus folgendem
Grund wichtig: Wenn während längerer 'O'-Folgen oder
'1'-Folgen in dem an e1 gegebenen Datenstrom über
mehrere Bit- bzw. Taktperioden die kurzen negativen
Impulse am Triggereingang e ausbleiben, werden die
Ausgangssignale am Ausgang A des Multivibrators über den
aus der Verzögerung V2 und dem UND-Glied U bestehenden
Rückkoppelmechanismus erzeugt und ein entsprechender
Takt aufrechterhalten. Wegen stets vorhandener Instabilitäten, beispielsweise erzeugt durch Temperaturschwankungen, Exemplarstreuungen, usw. kann die genannte Gesamtverzögerung, die sich aus der Summe der Laufzeiten
durch das UND-Gatter, den Multivibrator und die Verzögerung V2 selbst ergibt, nicht genau eingehalten werden
und insbesondere nicht genau gleich der Länge des bestimmten Taktes bzw. eines Bits gewählt werden. Durch diesen Umstand wird die Phase zwischen dem durch die Ausgangssignale des Multivibrators gegebenen Taktes und dem
bestimmten Takt der Daten stark auseinanderlaufen.
Dadurch ginge der Takt verloren. Das UND-Glied U sorgt
jedoch dafür, daß die Synchronisation immer dann wieder
hergestellt werden kann, wenn ein kurzer negativer
Impuls aus a1 und damit eine negative Impulsflanke am
Eingang e erscheint. Damit nun sicher der neuerliche
Anstoß des Multivibrators durch diese negative Flanke
erfolgen kann, darf die negative Vorderflanke des
verzögerten Ausgangssignals am anderen Eingang e6 des
UND-Gliedes nicht früher anliegen, als die negative
Flanke des kurzen negativen Impulses aus a1 am Eingang e
dieses Gliedes. Damit die anstoßenden negativen Flanken
in ausreichend kurzen Zeitabständen immer wieder an e
erscheinen, werden die Daten, die an den Eingang e1 zu
geben sind, zweckmäßigerweise vorher durch einen
Scrambler geschickt, der bekanntlich zu lange '0'- und
'1'-Folgen verhindert. Dadurch kann erreicht werden, daß
die an e1 gegebenen Daten immer nur eine einstellbare
Maximalzahl von Dauer-Nullen bzw. Dauer-Einsen enthalten
können.

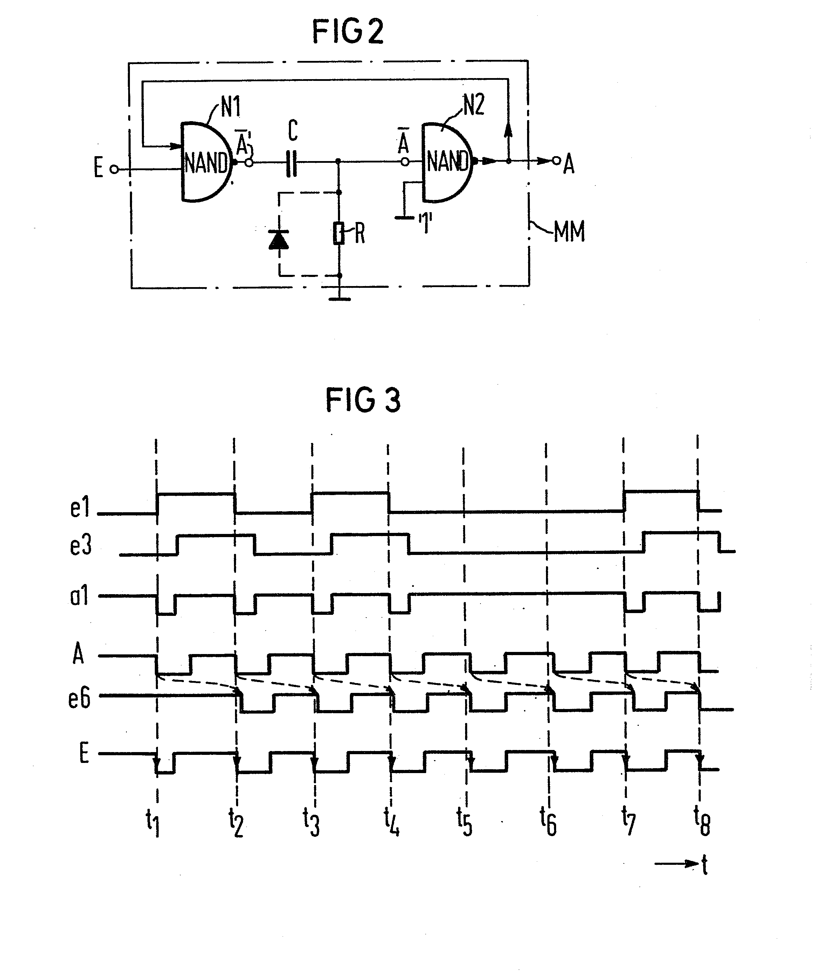

In der Figur 3 sind Impulsfolgen über der Zeit t
dargestellt, wie sie an verschiedenen Stellen der
Vorrichtung nach Figur 1 abgegriffen werden können.

Die Impulsfolge e1 stellt einen willkürlichen Ausschnitt
aus einer Impulsfolge dar, wie sie in Daten vorkommt,
welche auf den Eingang e1 der Vorrichtung nach Figur 1
gegeben werden und unverzögert an den Eingang e2 des
exklusiven ODER-Gliedes EXOR gelangen. Die Impulsfolge
e3 ist die um die unkritische Verzögerungszeit des
Verzögerungsgliedes V1 verzögerte Impulsfolge, wie sie
am Eingang e3 des exklusiven ODER-Gliedes anliegt. Am Ausgang a1 des Inverters I erscheint dadurch die Impulsfolge a1. Die Vorderflanken der negativen Impulse dieser
Impulsfolge a1 triggern den monostabilen Multivibrator
M.M. und am Ausgang A dieses Multivibrators erscheint
die Impulsfolge A. Die Triggerung durch die Impulse der
Impulsfolge a1 erfolgt natürlich nur so lange als
Impulse vorhanden sind. Nach dem vierten Impuls von
links erfolgt für zwei Takte keine Triggerung durch
Datenimpulse. In dieser Zeit wird der Rückkoppelmechanismus der Schaltung 1 wirksam und der Multivibrator
triggert sich selbst durch seine verzögert rückgekoppelten Ausgangssignale. Die an dem anderen Eingang e6 des
UND-Gliedes erscheinende Folge verzögerter Ausgangssignale ist durch die Impulsfolge e6 gegeben. Die
gestrichelten Pfeile deuten die Verzögerung an. Die
unterste Impulsfolge E gibt die Impulsfolge an, die am
Eingang E des monostabilen Multivibrators erscheint.

Dem eigentlichen Nutzdatenstrom, der an den Eingang e1
der Vorrichtung nach Figur 1 zu geben ist, wird ein
'1'-Bit vorangestellt. Durch dieses '1'-Bit erscheint an
E eine negative Flanke, durch die der monostabile
Multivirator M.M. kippt.

Für die Anwendung in optischen Datenbussen mit hohen
Datenraten um 20 MBit/sec konnte nicht ein einzelnes IC
in TTL-Technik verwendet werden, weil diese Multivibratoren in käuflicher Technik zur Zeit zu langsam sind.
Die zum Triggern des M.M. geforderten minimalen Längen
der Eingangsimpulse sind zu groß, ebenso ist die Erholzeit des Multivibrators, d.h. die Zeit bis nach
Beendigung des instabilen Zustandes der eingeschwungene
Zustand wieder erreicht ist, groß. Deshalb wurde der
Multivibrator über zwei NAND- Gatter in S-TTL-Technik
diskret aufgebaut. Der Aufbau ist in Figur 2
dargestellt.

Gemäß dieser Figur 2 besteht der Multivibrator aus zwei
NAND-Gliedern N1 und N2 mit jeweils zwei Eingängen. Ein
Eingang des NAND-Gliedes N1 bildet den Eingang E des
Multivibrators. Ein Ausgang $\overline{A}$' dieses Gliedes N1 ist
über ein RC-Glied, bestehend aus einer Kapazität C und
einem Widerstand R, mit einem Eingang $\overline{A}$ des zweiten
NAND-Gliedes N2 verbunden, dessen Ausgang den Ausgang A
des Multivibrators bildet. Dieser Ausgang A ist mit dem
zweiten Eingang des ersten NAND-Gliedes N1 rückverbunden. Der zweite Eingang des zweiten NAND-Gliedes N2 ist
konstant auf '1' gelegt, so daß dieses zweite Glied
einen Inverter bildet.

Es ist auf folgende Punkte zu achten: Bei Start der
instabilen Kipplage des Multivibrators M.M. sollte das
Potential bei $\overline{A}$ immer den gleichen Wert haben. Das kann
möglicherweise durch eine genügend kleine RC-Zeitkonstante erreicht werden. Dann wird möglicherweise das Tastverhältnis des Taktes unsymmetrisch und müßte eventuell
nachgeformt werden. Oder eines wird eine Anordnung des
M.M. gewählt, in der die Auflade- und Entladezeit des
Multivibratos unterschiedlich gewählt werden können;
beispielsweise kann die Aufladezeit bei $\overline{A}$ gegenüber der
Entladezeit durch Verwendung einer Diode, wie sie in der
Figur 2 parallel zum Widerstand R angeordnet ist,
verkürzt werden. Im konkreten Fall von 20 MBit/s
Datenrate sind diese Maßnahmen nicht nötig gewesen. Von
Fall zu Fall kann es auch von Vorteil sein, die Eingangsimpulse am Eingang E durch Differentiation zu
verkürzen. Wenn es erforderlich ist, daß der Takt mit
Beendigung der Daten verschwindet, kann der Takt beispielsweise durch ein UND-Glied geschickt und dieses
durch beispielsweise ein Daten-Gültigkeitssignal
(Valid-Signal) gesteuert werden.

Für eine Realisierung eines monostabilen Multivibrators nach Figur 2 wurden als NAND-Glieder die Bausteine SN 74 S 00 von Texas Instruments verwendet. Der Widerstand R betrug 390 Ohm und die Kapazität C 100 pF. Eine zum Widerstand R parallel geschaltete Diode erübrigte sich.

Mit einer solchen Realisierung eines monostabilen Multivibrators nach Figur 2 wurde eine erfindungsgemäße Vorrichtung nach Figur 1 aufgebaut. Für das UND-Gatter U ist der Baustein SN 74 S 08 verwendet worden.

Die so ausgebildete Vorrichtung wurde an einem konkreten passiven, optischen Stern-Bus für 16 Teilnehmer, 16 MBit/s und 600 m Entfernung zwischen den Teilnehmern mit guten Ergebnissen ausprobiert. Der Vergleich der ursprünglichen mit den zurückgewonnenen Daten ergab eine gemessene Fehlerwahrscheinlichkeit von weniger als $10^{-9}$.

Der monostabile Multivibrator M.M. kann auch mit NOR-Gliedern realisiert werden. Dann ist anstelle des UND-Gliedes U in Figur 1 ein ODER-Glied zu verwenden und der Inverter I entfällt.

8 Patentansprüche
3 Figuren

Patentansprüche

1. Vorrichtung zur Rückgewinnung eines bestimmten Taktes aus einer mit diesem Takt getakteten Signalfolge, insbesondere einer Zufallsfolge, g e k e n n z e i c h - n e t   d u r c h  einen Taktgenerator, der von sich aus Taktsignale in einem Takt erzeugt, dessen Taktlänge auf den bestimmten Takt der Signalfolge abgestimmt ist, und der durch ein oder mehrere bestimmte Signale der Signalfolge extern triggerbar ist, um dadurch seinen Takt mit dem Takt der Signalfolge zu synchronisieren.

2. Vorrichtung nach Anspruch 1, d a d u r c h   g e - k e n n z e i c h n e t ,  daß der Takt des Taktgenerators wiederholt  durch in zeitlichen Abständen auftretende bestimmte Signale der Signalfolge synchronisierbar ist, wobei die zeitlichen Abstände einen Maximalabstand nicht überschreiten, der einer vorgebbaren Maximalzahl aus aufeinanderfolgenden Taktlängen des bestimmten Taktes der Signalfolge entspricht.

3. Vorrichtung nach Anspruch 2, d a d u r c h   g e - k e n n z e i c h n e t ,  daß der Taktgenerator einen monostabilen Multivibrator aufweist, in dem durch die bestimmten Signale der Signalfolge Ausgangssignale auslösbar sind und dessen Ausgangssignale um etwa die Taktlänge des bestimmten Taktes verzögert auf ihn rückkoppelbar sind, um dadurch ständig und etwa in dem bestimmten Takt der Signalfolge erneut Ausgangssignale auszulösen, welche die Taktsignale bilden.

4. Vorrichtung nach Anspruch 3, d a d u r c h   g e - k e n n z e i c h n e t ,  daß die Summe aus der Verzögerungszeit für die zum monostabilen Multivibrator rückzukoppelnden Ausgangssignale und der Verzögerungszeit durch den Multivibrator selbst etwas größer gewählt ist, als die Taktlänge des bestimmten Taktes.

5. Vorrichtung nach Anspruch 3 oder 4, d a d u r c h
g e k e n n z e i c h n e t , daß die bestimmten
Signale der Zufallsfolge (a1) und die Ausgangssignale
des Multivibrators einen bestimmten Signalwechsel
aufweisen, auf die der Multivibrator anspricht und daß
ein sowohl von den Signalen der Zufallsfolge als auch
den rückzukoppelnden Ausgangssignalen des Multivibrators
zu beaufschlagendes Tor vorgesehen ist, welches so
ausgebildet ist, daß es den bestimmten Signalwechsel in
jedem Ausgangssignal, aber auch jeden in der Zufallsfolge auftretenden bestimmten Signalwechsel zum
Multivibrator durchläßt.

6. Vorrichtung nach Anspruch 5, d a d u r c h g e -
k e n n z e i c h n e t , daß die Ausgangssignale und
die bestimmten Signale der Zufallsfolge (a1) aus negativen
Impulsen bestehen, deren Vorderflanken den bestimmten
Signalwechsel bilden, auf den der Multivibrator anspricht, und daß das Tor aus einem UND-Glied mit zwei
Eingängen besteht, von denen der eine mit den Signalen
der Zufallsfolge und der andere mit den rückzukoppelnden
Ausgangssignalen zu beaufschlagen ist, oder daß die
bestimmten Signale der Zufallsfolge und die Ausgangssignale des monostabilen Multivibrators aus positiven
Impulsen bestehen, deren Vorderflanke den bestimmten
Signalwechsel bilden, auf den der Multivibrator anspricht, und daß das Tor aus einem OR-Glied mit zwei
Eingängen besteht, von denen der eine mit den Signalen
der Zufallsfolge und der andere mit den rückzukoppelnden
Ausgangssignalen zu beaufschlagen ist.

7. Vorrichtung nach einem der Ansprüche 3 bis 6, d a -
d u r c h g e k e n n z e i c h n e t , daß eine Signalformungseinrichtung vorgesehen ist, die an allen Signalwechseln der Signalfolge (e1) ein kurzzeitiges Signal
mit ein und derselben Polarität erzeugt, das zum Triggern des Taktgenerators zu verwenden ist .

8. Vorrichtung nach Anspruch 7, d a d u r c h   g e -
k e n n z e i c h n e t , daß die Signalformungseinrichtung ein Verzögerungsglied und ein Vergleichstor
aufweist, und daß das Vergleichstor die Signalwerte der
Signalfolge mit denen der verzögerten Signalfolge vergleicht und jeweils nur dann und solange ein Signal
abgibt, wenn und solange die Signalwerte der unverzögerten und verzögerten Folge voneinander verschieden
sind.

# FIG 1

Daten
e1

e2
e3
EXOR
a3
e4
I
Inv.
a1
e

Verzögerung
V1

UND
U
e6
e7

E
Manostab
Multivibrat
M.M.
A

Verzögerung
V2

2

1

0121977

FIG 2

FIG 3